# EUROPEAN PATENT SPECIFICATION

(11) **EP 1 939 117 B1**
(45) Date of publication and mention of the grant of the patent: **12.08.2009**
(21) Application number: 06425886.6
(22) Date of filing: 29.12.2006
(51) Int. Cl.: B65G 29/00, B65G 47/68, B65G 47/84

(54) **Apparatus for conveying containers with non circular cross section**
Vorrichtung zur Beförderung von Behältern mit nicht-kreisförmigem Querschnitt
Appareil pour transporter des conteneurs de section non circulaire

(43) Date of publication of application: 02.07.2008
(73) Proprietor: SIDEL HOLDINGS & TECHNOLOGY S.A., 1009 Pully (CH)
(72) Inventor: Carmichael, James, 1009 Pully (CH); Ferri, Marco, 1009 Pully (CH); Dalcielo, Massimiliano, 1009 Pully (CH)
(74) Representative: Gotra, Stefano

(56) References cited:
- EP-A1- 0 492 371
- EP-A1- 0 659 683
- WO-A-01/36306
- WO-A-20/06097796
- FR-A1- 2 736 299
- FR-A1- 2 794 731

## Description

The present invention relates to an apparatus for conveying containers with non circular cross section.

In particular, the present invention finds application in bottling lines operating on bottles with substantially square cross section.

The apparatus also finds specific but not exclusive application at the input of a labelling machine.

The presence of multi-line conveyors, i.e. conveyors having a plurality of input lines for the containers, and the need in any case to have ultimately a single flow into the machine (e.g. labelling machine) which has to operate a treatment on the containers, requires the availability of considerable space in plants to allow the reduction from multiple flows to a single flow.

It would therefore be desirable to find a solution that enables to merge the flows within a smaller space.

An additional problem encountered in the prior art is that, when operating on containers whose cross section is not circular, but for instance square (i.e. containers for which the orientation and positioning during conveyance is fundamental, above all for the labelling step), there can be problems with the imperfect orientation of the containers, with consequent erroneous positioning of the label thereon.

If star conveyors interacting with each other and counter-rotating were used to merge multiple flows into a single flow of containers, there would be the problem of the shape of the counter-guide, which could not extend too much towards a star conveyor without interfering with the flow of the containers coming from the other one.

The containers would thus be guided only partially and this is unacceptable when containers with square cross section are involved for which a correct orientation is essential for a good labelling. In fact, if the containers are shaped as revolution profile the orientation is not important, but when the containers are square it is essential assuring the correct orientation before the entrance in the labelling machine.

Such a problem is especially crucial in high conveyance speeds, in which the uncorrected orientation is more evident.

Document WO 2006/097796 discloses an apparatus for conveying containers according to the preamble of claim 1, to optimize the feeding of bottles in filling plants, comprising a synchronizing star with peripheral alveoli having the same pitch as a synchronized filling machine to allow the simultaneous engagement of two converging and synchronized blowing machines equipped with double-pitched exit wheels.

It is an aim of the present invention to eliminate the aforesaid drawbacks, by making available an apparatus for conveying containers with non circular cross section which is able to drastically reduce space occupation.

An additional aim of the present invention is to propose an apparatus for conveying containers with non circular cross section which allows a better precision in the conveyance of the containers, in order to obtain a perfect orientation thereof, in pat-ticular for the labelling step.

Said aims are fully achieved by an apparatus for conveying containers with non circular cross section according to Claim 1.

This and other aims shall become more readily apparent from the following description of a preferred embodiment, illustrated purely by way of non limiting example in the accompanying drawing tables, in which:
- Figure 1 shows a schematic plan view of an apparatus for conveying containers with non circular cross section, according to the present invention;
- Figure 2 shows a structural plan view of the apparatus illustrated in Figure 1;
- Figure 3 shows a plan view of a structural element of the apparatus illustrated in figures 1 and 2;
- Figure 4 shows a perspective view of the structural element illustrated in figure 3;
- Figure 5 shows an exploded view of a guiding element of the apparatus illustrated in figures from 2 to 4.

With reference to the figures, the numeral 1 globally designates an apparatus for conveying containers 2 with non circular cross section, in the illustrated case said containers 2 are bottles.

The apparatus 1 comprises a first input conveyor 3a which through a first star-wheel 4a feeds the containers to a subsequent re-uniting star-wheel 5 and a second input conveyor 3b which through a second star-wheel 4b feeds the containers to an auxiliary star-wheel 6. In the illustrated embodiment, both input conveyors 3a and 3b are linear.

In the specific case the re-uniting star-wheel 5 constitutes the output conveyor on which two distinct conveyance flows coming from the first and the second input conveyors 3a, 3b are re-united, while the auxiliary star-wheel 6 constitutes an intermediate conveyor cooperating with said re-uniting star-wheel 5.

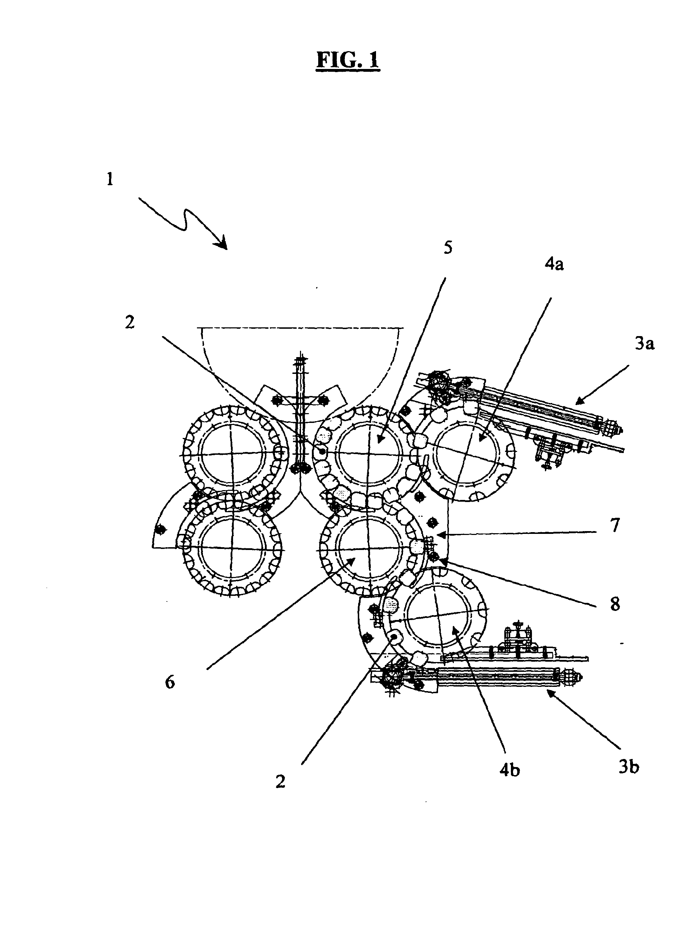

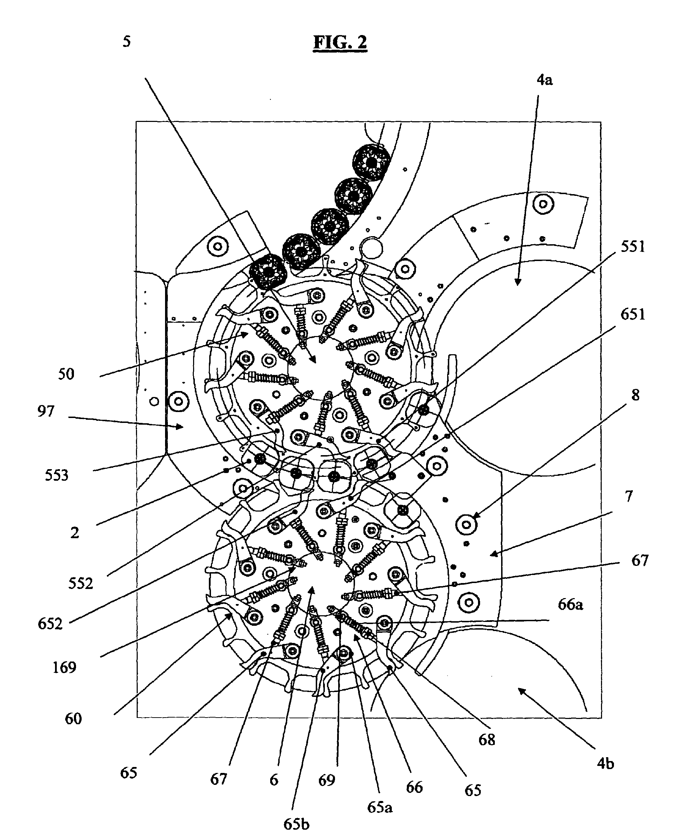

With reference to figures 1 and 2, the apparatus 1 comprises a fixed counter-guide 7 acting on the body of the containers 2 and fastened by means of screws 8 which allow the counter-guide 7 to be adjusted according to the format of the containers that interact with the star-wheel 4a, 4b, with the re-uniting star-wheel 5 and with the auxiliary star-wheel 6.

According to present invention, both the re-uniting star-wheel 5 and the auxiliary star-wheel 6 have an even number of pits for the containers.

Furthermore, the input star-wheel 4a and 4b have a number n of pits, whereas the re-uniting star-wheel 5 has a number 2n of pits, having to receive and unify the two input flows. Also the auxiliary star-wheel 6 has a number 2n of pits, but only half of them receive containers from the input star-wheel 4b.

The regions where the multiple flows merge into a single conveyance flow, hereinafter "merging area", is at the confluence between the auxiliary star-wheel 6 and the re-uniting star-wheel 5.

According to present invention, the apparatus 1 comprises guiding means for directing the containers 2 when they reach the merging area.

With reference to the figures, said guiding means comprise first engaging means 50 mounted on the re-uniting star-wheel 5 and acting on containers housed in corresponding pits of the auxiliary star-wheel 6, in order to keep them correctly oriented into said pits before they are transferred on the re-uniting star-wheel 5.

Said guiding means further comprise second engaging means 60 mounted on the auxiliary star-wheel 6 and acting on containers housed in corresponding pits of the re-uniting star-wheel 5, in order to keep them correctly oriented into said pits during the rotation of the re-uniting star-wheel 5.

In particular, said first and second engaging means 50, 60 are active when the containers reach the merging area.

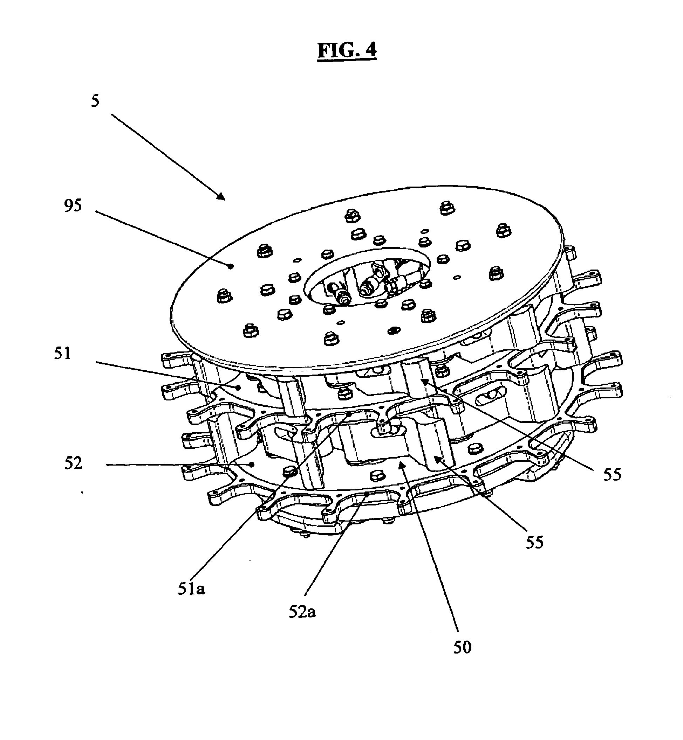

According to a preferred embodiment shown in figure 4, said re-uniting star-wheel 5 is multi-layered and comprises an upper layer 51 having a plurality of pits 51a so shaped as to house an upper portion of a container. The re-uniting star-wheel 5 further comprises a lower layer 52 integral with said upper layer 51 and having a plurality of pits 52a so shaped as to house a lower portion of a container.

With particular reference to figure 4, the first engaging 50 means are mounted both on a body of the upper layer 51 wheel and on a body of the lower layer 52.

Preferably, also the auxiliary star-wheel is multi-layered and comprises an upper layer having a plurality of pits so shaped as to house an upper portion of a container and a lower layer integral with said upper layer and having a plurality of pits so shaped as to house a lower portion of a container. In particular, said second engaging means are mounted both on a body of the upper layer and on a body of the lower layer.

The auxiliary star-wheel with a multi-layer assembly is not illustrated because substantially identical to the re-uniting star-wheel shown in figure 4.

According to another embodiment not shown, it is envisaged the possibility to realize only the auxiliary star-wheel with a multi-layer assembly.

According to the embodiment shown in figure 4, the re-uniting star-wheel and/or the auxiliary star-wheel has a disc 95 positioned on the top of the upper layer and protruding outside the overall dimension of the star-wheel, in order to guide the neck of the container, allowing a greater stability to it during the transportation. More precisely, the disc is substantially as high as the container inserted in the pits.

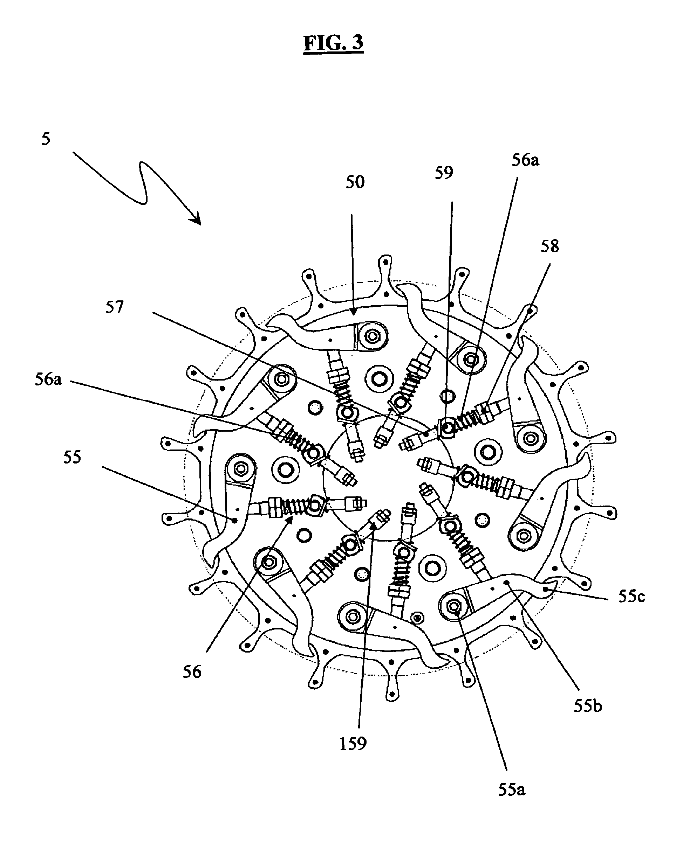

With particular reference to figure 3, the first engaging means 50 comprise a first plurality of rotating blades 55 positioned on the re-uniting star-wheel 5 at alternate pits. More precisely, the number of the rotating blades 55 is half of the number of the pits and each of said rotating blades is movable between an extracted position (for example the position of the blades 551, 552 in figure 2), in which a blade acts on a corresponding container housed on a pit of the auxiliary star-wheel, in order to keep the container in its pit, and a retracted position (for example the position of the blade 553 in figure 2), in which the same blade is kept disengaged from the pit by the presence of the container that, in the meantime, has been transferred from the auxiliary star-wheel 6 to the re-uniting star-wheel 5.

According to the preferred embodiment shown in figure 3, each rotating blade 55 comprises a connecting portion 55a pivotably mounted on the re-uniting star-wheel 5, an active portion 55c operating on a container of the auxiliary star-wheel 6 and an intermediate portion 55b positioned between said former portions. In particular, each rotating blade reciprocates between an extracted position, in which the active portion 55c protrude towards a pit of the auxiliary star-wheel 6 to keep the container in said pit, and a retracted position, in which the active portion is kept disengaged from the pit by the presence of the container that, in the meantime, has been transferred from the auxiliary star-wheel 6 to the re-uniting star-wheel 5.

The apparatus 1 comprise means for activating the reciprocating movement of the rotating blades 55 of the re-uniting star-wheel 5.

According to the preferred embodiment shown in figures 2 and 3, said means for activating the reciprocating movement of the rotating blades 55 of the re-uniting star-wheel 5 comprise a plurality of elastic longitudinal elements 56, preferably springs 56a winding around respective bars 57 and blocked between two ends of stroke 58, 59. In particular, a first end of stroke 59 is pivotably fixed on the re-uniting star-wheel 5, while a second end of stroke 58 is integral with the bar 57, which is connected to the intermediate portion 55b of a corresponding blade 55. The first pivoting end of stroke 59 acts as a striker for an adjustable stop 159 positioned at an end of the bar 57, in order to adjust the entity of extraction of the blades.

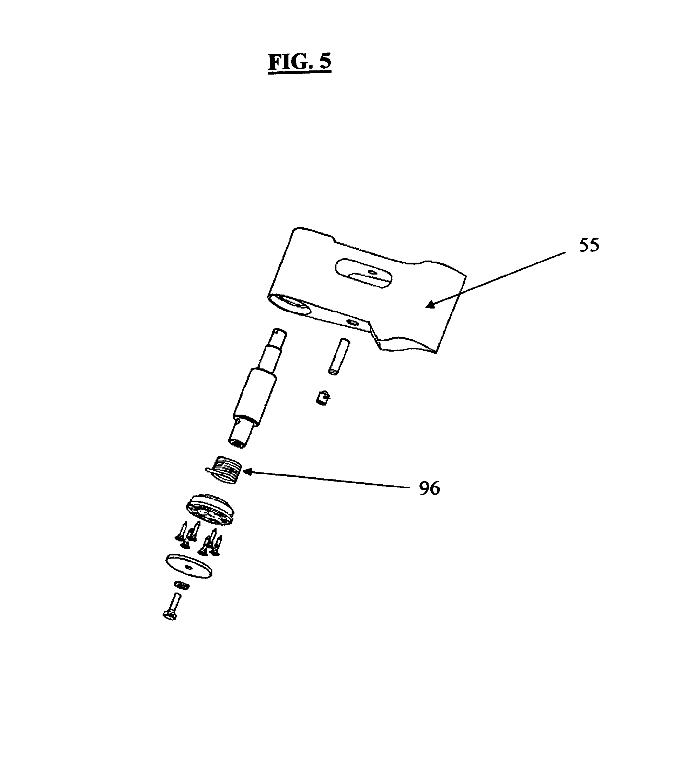

According to an alternative or parallel operation embodiment shown in figure 5, the means for activating the reciprocating movement of the rotating blades of the re-uniting star-wheel can comprise a plurality of torsional elastic elements, each of them being fixed to the re-uniting star-wheel 5 and linked to the pivotably connecting portion 55a of a corresponding blade 55.

According to the invention and with particular reference to figure 2, said second engaging means 60 comprise a second plurality of rotating blades 65 positioned on the auxiliary star-wheel 6 at alternate pits, the number of the rotating blades being half of the number of the pits. In particular, each of said rotating blades 65 is movable between an extracted position, in which a blade acts on a corresponding container housed on a pit of the re-uniting star-wheel 5 (for example the position of the blade 651 in figure 2), in order to keep the container in its pit, and an at least partially retracted position (for example the position of the blade 652 in figure 2), in which the same blade is kept partially disengaged from the pit by the presence of the container that, in the meantime, has approached the auxiliary star-wheel 6 because of the rotation of the re-uniting star-wheel 5.

According to the embodiment shown in figure 2, each rotating blade 65 comprises a connecting portion 65a pivotably mounted on the auxiliary star-wheel 6, an active portion 65c operating on a container of the re-uniting star-wheel 5 and an intermediate portion 65b positioned between said former portions. In particular, each rotating blade 65 reciprocates between an extracted position, in which a blade acts on a corresponding container housed on a pit of the re-uniting star-wheel 5, in order to keep the container in its pit, and an at least partially retracted position, in which the same blade is kept partially disengaged from the pit by the presence of the container that, in the meantime, has approached the auxiliary star-wheel 6 because of the rotation of the re-uniting star-wheel 5.

The apparatus 1 further comprise means for activating the reciprocating movement of the rotating blades 65 of the auxiliary star-wheel 6.

According to the invention and with particular reference to figure 2, said means for activating the reciprocating movement of the rotating blades 65 of the auxiliary star-wheel 6 comprise a plurality of elastic longitudinal elements 66, preferably springs 66a winding around bars 67 and blocked between two ends of stroke 68, 69. In particular, a first end of stroke 69 is pivotably fixed on the auxiliary star-wheel 6, while a second end of stroke 68 is integral with the respective bar 67, which is connected to the intermediate portion 65b of a corresponding blade 65. The first pivoting end of stroke 69 acts as a striker for an adjustable stop 169 positioned at an end of the bar 67, in order to adjust the entity of extraction of the blades. Such a configuration is substantially identical to that of the re-uniting star-wheel 5 above described.

In an alternative or parallel operation embodiment shown in figure 5, the means for activating the reciprocating movement of the rotating blades 65 of the auxiliary star-wheel 6 can comprise a plurality of torsional elastic elements 96, each of them being fixed to the auxiliary star-wheel 6 and linked to the pivotably connecting portion 65a of a corresponding blade 65.

According to the invention, both said first plurality and said second plurality of blades 55, 65 are preferably made of plastic material.

With reference to figure 2, a second fixed counter-guide 97 is positioned near the re-uniting star-wheel 5, after the merging area, in order to keep the containers 2 inside the corresponding pits of said re-uniting star-wheel 5.

The auxiliary star-wheel 6 has a number 2n of pits, but only half of them receive containers from the input star-wheel 4b, because of the presence of the second engaging means, i.e. the blades 65, that are necessary in order to keep the containers of the re-uniting star-wheel 5 correctly oriented in the pits and firmly blocked inside them and because of the fact that the input star-wheel 4b has an half number of pits.

The functioning of the apparatus is as follows.

When a container of the auxiliary star-wheel 6 reaches the merging area and leaves the fixed counter guide 7, a blade 55 (see for example the blade 552) of the re-uniting star-wheel 5 acts on said container to push it against the wall of the corresponding pit of the auxiliary star-wheel 6, in order to keep the container oriented and blocked.

Subsequently, because of the rotation of both the auxiliary and the re-uniting star-wheel 6, 5, the container starts inserting inside a corresponding pit of the re-uniting star-wheel 5 and at the same time pushes the blade 55, forcing it to assume the retracted position (see for example the blade 553 in figure 2).

Afterwards, the re-uniting star-wheel 5 goes on rotating, thus leading the container to interact with the second fixed counter-guide 97.

As far as the interaction between the containers already on the re-uniting star-wheel 5 and the blades 65 of the auxiliary star-wheel 6, said blades starts engaging the containers when they leave the fixed counter-guide 7 (see for example the blade 651 in figure 2). In particular, when the blades 65 of the auxiliary star-wheel 6 acts on the containers of the re-uniting star-wheel 5, they are in said extracted position.

Afterwards, due to the rotation of both the star-wheel, the container on which the blade is active approaches the auxiliary star-wheel 6, forcing the blade to assume said at least partially retracted position (see for example the blade 652 of figure 2). In such a way, the container is kept well oriented and blocked on the re-uniting star-wheel 5.

An important advantage of the present invention resides in the fact that such an apparatus is able to drastically reduce space occupation.

Advantageously, such an apparatus for conveying containers with non circular cross section allows a better precision in the conveyance of the containers, thus allowing a perfect orientation thereof, in particular for the labelling step.

The re-uniting and the auxiliary star-wheel 5, 6, in combination with the multiple input, allow the advantage of reducing the bulks necessary to shift from a multi-line flow to a flow on a single conveyance line.

## Claims

1. Apparatus (1) for conveying containers (2) with non circular cross-section, comprising:
at least two input conveyors (3a, 3b) through which at least two distinct conveyance flows reach the apparatus;
a plurality of star-wheels (4a, 4b, 5, 6) for receiving the containers (2) from the input conveyors (3a, 3b) and release them on a single output conveyance flow, said plurality of star-wheels (4a, 4b, 5, 6) comprising at least a re-uniting star-wheel (5), on which the two distinct conveyance flows are re-united, and an auxiliary star-wheel (6) cooperating with said re-uniting star-wheel (5);
guiding means for directing the containers (2) when they reach an area where multiple flows merge into a single conveyance flow, said merging area being located between said re-uniting star-wheel (5) and said auxiliary star-wheel (6),
**characterized in that** said guiding means comprise:
first engaging means (50) mounted on the re-uniting star-wheel (5) and acting on containers housed in corresponding pits of the auxiliary star-wheel (6) to keep them correctly oriented into said pits before they are transferred on the re-uniting star-wheel (5);
second engaging means (60) mounted on the auxiliary star-wheel (6) and acting on containers housed in corresponding pits of the re-uniting star-wheel (5) to keep them correctly oriented into said pits during the rotation of the re-uniting star-wheel (5),
said first and second engaging means (50, 60) being active when the containers (2) reach said merging area.

2. Apparatus according to claim 1, in which said re-uniting star-wheel (5) is multi-layered and comprises:
an upper layer (51) having a plurality of pits (51a) so shaped as to house an upper portion of a container;
a lower layer (52) integral with said upper layer (51) and having a plurality of pits (52a) so shaped as to house a lower portion of a container,
said first engaging means (50) being mounted on a body of the upper layer (51) and/or on a body of the lower layer (52).

3. Apparatus according to anyone of the preceding claims, in which said auxiliary star-wheel (6) is multi-layered and comprises:
an upper layer having a plurality of pits so shaped as to house an upper portion of a container;
a lower layer integral with said upper layer and having a plurality of pits so shaped as to house a lower portion of a container,
said second engaging means being mounted on a body of the upper layer and/or on a body of the lower layer.

4. Apparatus according to anyone of the preceding claims, in which both the re-uniting star-wheel (5) and the auxiliary star-wheel (6) have an even number of pits for the containers.

5. Apparatus according to claim 4, in which said first engaging means (50) comprise a first plurality of rotating blades (55) positioned on the re-uniting star-wheel (5) at alternate pits, the number of the rotating blades (55) being half of the number of the pits, each of said rotating blades (55) being movable between an extracted position, in which a blade acts on a corresponding container housed on a pit of the auxiliary star-wheel (6) to keep the container in its pit, and a retracted position, in which the same blade is kept disengaged from the pit by the presence of the container that, in the meantime, has been transferred from the auxiliary star-wheel (6) to the re-uniting star-wheel (5).

6. Apparatus according to claim 5, in which each rotating blade (55) comprises a connecting portion (55a) pivotably mounted on the re-uniting star-wheel (5), an active portion (55c) operating on a container of the auxiliary star-wheel (6) and an intermediate portion (55b) positioned between said former portions, each rotating blade (55) being reciprocated between an extracted position, in which the active portion (55c) protrude towards a pit of the auxiliary star-wheel (6) to keep the container in said pit, and a retracted position, in which the active portion (55c) is kept disengaged from the pit by the presence of the container that, in the meantime, has been transferred from the auxiliary star-wheel (6) to the re-uniting star-wheel (5).

7. Apparatus according to claim 6, comprising means for activating the reciprocating movement of the rotating blades (55) of the re-uniting star-wheel (5).

8. Apparatus according to claim 7, in which said means for activating the reciprocating movement of the rotating blades (55) of the re-uniting star-wheel (5) comprise a plurality of elastic longitudinal elements (56), each of them having a first end pivotably fixed on the re-uniting star-wheel (5) and a second end fixed to the intermediate portion (55b) of a corresponding blade (55).

9. Apparatus according to claim 7, in which said means for activating the reciprocating movement of the rotating blades (55) of the re-uniting star-wheel (5) comprise a plurality of torsional elastic elements (96), each of them being fixed to the re-uniting star-wheel (5) and linked to the pivotably connecting portion (55a) of a corresponding blade (55).

10. Apparatus according to anyone of preceding claims from 4 to 9, in which said second engaging means (60) comprise a second plurality of rotating blades (65) positioned on the auxiliary star-wheel (6) at alternate pits, the number of the rotating blades (65) being half of the number of the pits, each of said rotating blades (65) being movable between an extracted position, in which a blade acts on a corresponding container housed on a pit of the re-uniting star-wheel (5) to keep the container in its pit, and an at least partially retracted position, in which the same blade is kept partially disengaged from the pit by the presence of the container that, in the meantime, has approached the auxiliary star-wheel (6) because of the rotation of the re-uniting star-wheel (5).

11. Apparatus according to claim 10, in which each rotating blade (65) comprises a connecting portion (65a) pivotably mounted on the auxiliary star-wheel (6), an active portion (65c) operating on a container of the re-uniting star-wheel (5) and an intermediate portion (65b) positioned between said former portions, each rotating blade (65) being reciprocated between an extracted position, in which a blade acts on a corresponding container housed on a pit of the re-uniting star-wheel (5) to keep the container in its pit, and an at least a partially retracted position, in which the same blade is kept partially disengaged from the pit by the presence of the container that, in the meantime, has approached the auxiliary star-wheel (6) because of the rotation of the re-uniting star-wheel (5).

12. Apparatus according to claim 11, comprising means for activating the reciprocating movement of the rotating blades (65) of the auxiliary star-wheel (6).

13. Apparatus according to claim 12, in which said means for activating the reciprocating movement of the rotating blades (65) of the auxiliary star-wheel (6) comprise a plurality of elastic longitudinal elements, each of them having a first end pivotably fixed on the auxiliary star-wheel (6) and a second end fixed to the intermediate portion (65b) of a corresponding blade.

14. Apparatus according to claim 12, in which said means for activating the reciprocating movement of the rotating blades (65) of the auxiliary star-wheel (6) comprise a plurality of torsional elastic elements, each of them being fixed to the auxiliary star-wheel (6) and linked to the pivotably connecting portion (65a) of a corresponding blade.

15. Apparatus according to anyone of the preceding claims 5-14, in which both said first plurality and said second plurality of blades (55, 65) are made of plastic material.

16. Apparatus according to claims 2 or 3, comprising a disc (95) positioned on the top of said upper layer and protruding outside the overall dimension of a star-wheel for guiding the neck of a container, whereby allowing a greater stability to it during the transportation.

## Patentansprüche

1. Vorrichtung (1) zur Beförderung von Behältern (2) mit nicht-kreisförmigem Querschnitt, umfassend:
mindestens zwei Eingangsförderer (3a, 3b), durch die mindestens zwei unterschiedliche Förderströme die Vorrichtung (1) erreichen;
eine Vielzahl an Sternrädern (4a, 4b, 5, 6) zur Aufnahme von Behältern (2) von den Eingangsförderern (3a, 3b) und deren Abgabe auf einen einzelnen Ausgangsförderstrom, wobei genannte Vielzahl an Sternrädern (4a, 4b, 5, 6) mindestens ein wiedervereinendes Sternrad (5), auf dem die zwei unterschiedlichen Förderströme wieder vereint werden, sowie ein Hilfssternrad (6), das mit genanntem wiedervereinenden Sternrad (5) zusammenarbeitet, umfassen;
Führungsmittel zum Lenken der Behälter (2), wenn diese einen Bereich erreichen, in dem Mehrfachströme zu einem einzigen Förderstrom zusammenfließen, wobei sich genannter Zusammenflussbereich zwischen dem genannten wiedervereinenden Sternrad (5) und dem genannten Hilfssternrad (6) befindet, **dadurch gekennzeichnet, dass** diese genannten Führungsmittel Folgendes umfassen:
erste Befestigungsmittel (50), die auf dem wiedervereinenden Sternrad (5) montiert sind und auf Behälter wirken, die in entsprechenden Vertiefungen des Hilfssternrads (6) untergebracht sind, damit sie korrekt ausgerichtet in den genannten Vertiefungen beibehalten werden, bevor sie auf das wiedervereinende Sternrad (5) übergeben werden;
zweite Befestigungsmittel (60), die auf dem Hilfssternrad (6) montiert sind und auf Behälter wirken, die in entsprechenden Vertiefungen des wiedervereinenden Sternrads (5) untergebracht sind, damit sie während der Drehung des wiedervereinenden Sternrads (5) korrekt ausgerichtet in den genannten Vertiefungen beibehalten werden,
wobei die genannten ersten und zweiten Befestigungsmittel (50, 60) aktiv sind, wenn die Behälter (2) den genannten Zusammenflussbereich erreichen.

2. Vorrichtung nach Anspruch 1, bei der das genannte wiedervereinende Sternrad (5) mehrschichtig ist und Folgendes umfasst:
eine obere Schicht (51) mit einer Vielzahl an Vertiefungen (51a), die so ausgebildet sind, dass sie einen oberen Abschnitt eines Behälters aufnehmen;
eine untere Schicht (52), die mit der genannten oberen Schicht (51) verbunden ist und eine Vielzahl an Vertiefungen (52a) aufweist, die so ausgebildet sind, dass sie einen unteren Abschnitt eines Behälters aufnehmen,
wobei die genannten ersten Befestigungsmittel (50) auf einem Körper der oberen Schicht (51) und/oder auf einem Körper der unteren Schicht (52) montiert sind.

3. Vorrichtung nach irgendeinem der vorherigen Ansprüche, bei der das genannte Hilfssternrad (6) mehrschichtig ist und Folgendes umfasst:
eine obere Schicht mit einer Vielzahl an Vertiefungen, die so ausgebildet sind, dass sie einen oberen Abschnitt eines Behälters aufnehmen;
eine untere Schicht, die mit der genannten oberen Schicht verbunden ist und eine Vielzahl an Vertiefungen aufweist, die so ausgebildet sind, dass sie einen unteren Abschnitt eines Behälters aufnehmen,
wobei die genannten zweiten Befestigungsmittel auf einem Körper der oberen Schicht und/oder auf einem Körper der unteren Schicht montiert sind.

4. Vorrichtung nach irgendeinem der vorherigen Ansprüche, bei der sowohl das wiedervereinende Sternrad (5) als auch das Hilfssternrad (6) eine gleiche Anzahl an Vertiefungen für die Behälter aufweisen.

5. Vorrichtung nach Anspruch 4, bei der die genannten ersten Befestigungsmittel (50) eine erste Vielzahl an Drehmessern (55) umfassen, die auf dem wiedervereinenden Sternrad (5) an abwechselnden Vertiefungen positioniert sind, wobei die Anzahl der Drehmesser (55) der Hälfte der Anzahl der Vertiefungen entspricht und jedes der genannten Drehmesser (55) zwischen einer ausgezogenen Position, in der ein Messer auf einen entsprechenden Behälter wirkt, der in einer Vertiefung im Hilfssternrad (6) untergebracht ist, um den Behälter in seiner Vertiefung beizubehalten, sowie einer eingezogenen Position, in der das gleiche Messer durch die Anwesenheit des Behälters, der in der Zwischenzeit vom Hilfssternrad (6) auf das wiedervereinende Sternrad (5) übergeben wurde, aus seiner Vertiefung herausgelöst beibehalten wird, beweglich ist.

6. Vorrichtung nach Anspruch 5, bei der jedes Drehmesser (55) einen Anschlussabschnitt (55a), der drehbar auf dem wiedervereinenden Sternrad (5) montiert ist, einen aktiven Abschnitt (55c), der auf einen Behälter des Hilfssternrads (6) wirkt, und einen Zwischenabschnitt (55b), der zwischen den genannten vorherigen Abschnitte positioniert ist, umfasst, wobei sich jedes Drehmesser (55) zwischen einer ausgezogenen Position, in der der aktive Abschnitt (55c) zu einer Vertiefung des Hilfssternrads (6) herausragt, um den Behälter in genannter Vertiefung beizubehalten, und einer eingezogenen Position, in der der aktive Abschnitt (55c) durch die Anwesenheit des Behälters, der in der Zwischenzeit vom Hilfssternrad (6) auf das wiedervereinende Sternrad (5) übergeben wurde, aus seiner Vertiefung herausgelöst beibehalten wird, hin-und herbewegt.

7. Vorrichtung nach Anspruch 6, umfassend Mittel zum Aktivieren der Hin- und Herbewegung der Drehmesser (55) des wiedervereinenden Sternrads (5).

8. Vorrichtung nach Anspruch 7, bei der genannte Mittel zum Aktivieren der Hin- und Herbewegung der Drehmesser (55) des wiedervereinenden Sternrads (5) eine Vielzahl an elastischer Längselemente (56) umfassen, von denen jedes ein erstes drehbar auf dem wiedervereinenden Sternrad (5) fixiertes Ende und ein zweites am Zwischenabschnitt (55b) des entsprechenden Messers (55) fixiertes Ende aufweist.

9. Vorrichtung nach Anspruch 7, bei der genannte Mittel zum Aktivieren der Hin- und Herbewegung der Drehmesser (55) des wiedervereinenden Sternrads (5) eine Vielzahl an elastischer Torsionselemente (96) umfassen, von denen jedes am wiedervereinenden Sternrad (5) fixiert und mit dem drehbaren Anschlussabschnitt (55a) eines entsprechenden Messers (55) verbunden ist.

10. Vorrichtung nach irgendeinem der vorherigen Ansprüche von 4 bis 9, bei der genannte zweite Befestigungsmittel (60) eine zweite Vielzahl an Drehmessern (65) umfassen, die auf dem Hilfssternrad (6) an abwechselnden Vertiefungen positioniert sind, wobei die Anzahl der Drehmesser (65) der Hälfte der Anzahl der Vertiefungen entspricht und jedes der genannten Drehmesser (65) zwischen einer ausgezogenen Position, in der ein Messer auf einen entsprechenden Behälter wirkt, der in einer Vertiefung des wiedervereinenden Sternrads (5) untergebracht ist, um den Behälter in seiner Vertiefung beizubehalten, sowie einer teilweise eingezogenen Position, in der das gleiche Messer durch die Anwesenheit des Behälters, der in der Zwischenzeit das Hilfssternrad (6) aufgrund der Drehung des wiedervereinenden Sternrads (5) erreicht hat, teilweise aus der Vertiefung herausgelöst beibehalten wird, beweglich ist.

11. Vorrichtung nach Anspruch 10, bei der jedes Drehmesser (65) einen Anschlussabschnitt (65a), der drehbar auf dem Hilfssternrad (6) montiert ist, einen aktiven Abschnitt (65c), der auf einen Behälter des wiedervereinenden Sternrads (5) wirkt, und einen Zwischenabschnitt (65b), der zwischen genannten vorherigen Abschnitte positioniert ist, umfasst, wobei sich jedes Drehmesser (65) zwischen einer ausgezogenen Position, in der ein Messer auf einen entsprechenden Behälter wirkt, der in einer Vertiefung des wiedervereinenden Sternrads (5) untergebracht ist, um den Behälter in seiner Vertiefung beizubehalten, und mindestens einer teilweise eingezogenen Position, in der das gleiche Messer durch die Anwesenheit des Behälters, der in der Zwischenzeit das Hilfssternrad (6) aufgrund der Drehung des wiedervereinenden Sternrads (5) erreicht hat, teilweise aus der Vertiefung herausgelöst beibehalten wird, hin- und herbewegt.

12. Vorrichtung nach Anspruch 11, umfassend Mittel zum Aktivieren der Hin- und Herbewegung der Drehmesser (65) des Hilfssternrads (6).

13. Vorrichtung nach Anspruch 12, bei der genannte Mittel zum Aktivieren der Hin- und Herbewegung der Drehmesser (65) des Hilfssternrads (5) eine Vielzahl an elastischer Längselemente umfassen, von denen jedes ein erstes drehbar auf dem Hilfssternrad (6) fixiertes Ende und ein zweites am Zwischenabschnitt (65b) des entsprechenden Messers fixiertes Ende aufweist.

14. Vorrichtung nach Anspruch 12, bei der genannte Mittel zum Aktivieren der Hin- und Herbewegung der Drehmesser (65) des Hilfssternrads (6) eine Vielzahl an elastischer Torsionselemente umfassen, von denen jedes am Hilfssternrad (6) fixiert und mit dem drehbaren Anschlussabschnitt (65a) eines entsprechenden Messers (55) verbunden ist.

15. Vorrichtung nach irgendeinem der vorherigen Ansprüche 5-14, bei der sowohl die erste Vielzahl als auch die zweite Vielzahl an Messern (55, 65) aus Kunststoffmaterial bestehen.

16. Vorrichtung nach Anspruch 2 oder 3, umfassend eine Scheibe (95), die an der Oberseite der genannten oberen Schicht positioniert ist und aus dem Außenmaß eines Sternrads zum Führen des Halses eines Behälters herausragt und **dadurch** dessen höhere Stabilität beim Transport ermöglicht.

## Revendications

1. Appareil (1) pour transporter des conteneurs (2) de section non circulaire comprenant :
au moins deux convoyeurs d'entrée (3a, 3b) par lesquels au moins deux différents flux de transport atteignent l'appareil ;
une série de roues étoile (4a, 4b, 5, 6) pour recevoir les conteneurs (2) des convoyeurs d'entrée (3a, 3b) et
les canaliser sur un seul flux de transport de sortie, ladite série de roues étoile (4a, 4b, 5, 6) comprenant au moins une roue étoile de réunion (5), sur laquelle deux différents flux de transport sont réunis, et une roue étoile auxiliaire (6) coopérant avec ladite roue étoile de réunion (5);
des moyens de guidage pour diriger les conteneurs (2) lorsqu'ils pénètrent dans une zone où plusieurs flux se regroupent en un seul flux de transport, ladite zone de regroupement étant située entre ladite roue étoile de
réunion (5) et ladite roue étoile auxiliaire (6), **caractérisé en ce que** ces moyens de guidage comprennent :
des premiers moyens d'engagement (50) montés sur la roue étoile de réunion (5) et agissant sur les conteneurs logés dans des cuvettes correspondantes de la roue étoile auxiliaire (6) pour maintenir leur orientation dans lesdites cuvettes avant de les transférer sur la roue étoile de réunion (5) ;
des deuxièmes moyens d'engagement (60) montés sur la roue étoile auxiliaire (6) et agissant sur les conteneurs logés dans des cuvettes correspondantes de la roue étoile de réunion (5) pour maintenir leur orientation dans lesdites cuvettes pendant la rotation de la roue étoile de réunion (5),
lesdits premiers et deuxièmes moyens d'engagement (50, 60) s'enclenchant lorsque les conteneurs (2) pénètrent dans ladite zone de regroupement.

2. Appareil selon la revendication 1, dans lequel ladite roue étoile de réunion (5) est constituée de plusieurs couches et comprend :
une couche supérieure (51) disposant de plusieurs cuvettes (51a) dont la forme est apte à loger une portion supérieure d'un conteneur ;
une couche inférieure (52) incorporée à ladite couche supérieure (51) et disposant de plusieurs cuvettes (52a) dont la forme est apte à loger une portion inférieure d'un conteneur,
étant lesdits premiers moyens d'engagement (50) montés sur un corps de la couche supérieure (51) et/ou sur un corps de la couche inférieure (52).

3. Appareil selon l'une quelconque des revendications précédentes, dans lequel ladite roue étoile auxiliaire (6) est constituée de plusieurs couches et comprend :
une couche supérieure disposant de plusieurs cuvettes dont la forme est apte à loger une portion supérieure d'un conteneur ;
une couche inférieure incorporée à ladite couche supérieure et disposant de plusieurs cuvettes dont la forme est apte à loger une portion inférieure d'un conteneur,
étant lesdits deuxièmes moyens d'engagement montés sur un corps de la couche supérieure et/ou sur un corps de la couche inférieure.

4. Appareil selon l'une quelconque des revendications précédentes, dans lequel la roue étoile de réunion (5) et la roue étoile auxiliaire (6) ont toutes deux un nombre égal de cuvettes pour les conteneurs.

5. Appareil selon la revendication 4, dans lequel lesdits premiers moyens d'engagement (50) comprennent une première série de lames tournantes (55) situées sur la roue étoile de réunion (5) une cuvette sur deux, le nombre de lames tournantes (55) étant la moitié du nombre des cuvettes, chacune desdites lames tournantes (55) pouvant passer d'une position dépliée, dans laquelle une lame agit sur un conteneur correspondant logé dans une cuvette de la roue étoile auxiliaire (6) pour maintenir le conteneur dans la cuvette, à une position repliée, dans laquelle la même lame est désengagée de la cuvette par la présence du conteneur qui, entre-temps, a été transféré de la roue étoile auxiliaire (6) à la roue étoile de réunion (5).

6. Appareil selon la revendication 5, dans lequel chaque lame tournante (55) comprend une portion de raccord (55a) montée de manière pivotable sur la roue étoile de réunion (5), une portion active (55c) agissant sur un conteneur de la roue étoile auxiliaire (6) et une portion intermédiaire (55b) située entre les portions susvisées, chaque lame tournante (55) faisant un mouvement de va-et-vient entre une position dépliée, dans laquelle la portion active (55c) fait saillie vers une cuvette de la roue étoile auxiliaire (6) pour maintenir le conteneur dans cette cuvette, et une position repliée, où la portion active (55c) est désengagée de la cuvette par la présence du conteneur qui, entre-temps, a été transféré de la roue étoile auxiliaire (6) à la roue étoile de réunion (5).

7. Appareil selon la revendication 6, comprenant des moyens pour activer le mouvement de va-et-vient des lames tournantes (55) de la roue étoile de réunion (5).

8. Appareil selon la revendication 7, dans lequel lesdits moyens d'activation du mouvement de va-et-vient des lames tournantes (55) de la roue étoile de réunion (5), comprennent plusieurs éléments longitudinaux élastiques (56), chacun ayant une première extrémité fixée de manière pivotable sur la roue étoile de réunion (5) et une deuxième extrémité fixée à la portion intermédiaire (55b) d'une lame correspondante (55).

9. Appareil selon la revendication 7, dans lequel lesdits moyens d'activation du mouvement de va-et-vient des lames tournantes (55) de la roue étoile de réunion (5), comprennent plusieurs éléments élastiques de torsion (96), étant chacun fixé à la roue étoile de réunion (5) et relié à la portion de raccord pivotable (55a) d'une lame correspondante (55).

10. Appareil selon l'une quelconque des revendications précédentes de 4 à 9, dans lequel lesdits deuxièmes moyens d'engagement (60) comprennent une deuxième série de lames tournantes (65) situées sur la roue étoile auxiliaire (6) une cuvette sur deux, le nombre de lames tournantes (65) étant la moitié du nombre des cuvettes, chacune desdites lames tournantes (65) pouvant passer d'une position dépliée, dans laquelle une lame agit sur un conteneur correspondant logé dans une cuvette de la roue étoile de réunion (5) pour maintenir le conteneur dans sa cuvette, à une position repliée au moins en partie, dans laquelle la même lame est désengagée partiellement de la cuvette par la présence du conteneur qui, entre-temps, s'est rapproché de la roue étoile auxiliaire (6) suite à la rotation de la roue étoile de réunion (5).

11. Appareil selon la revendication 10, dans lequel chaque lame tournante (65) comprend une portion de raccord (65a) montée de manière pivotable sur la roue étoile auxiliaire (6), une portion active (65c) agissant sur un conteneur de la roue étoile de réunion (5) et une portion intermédiaire (65b) située entre les portions susvisées, chaque lame tournante (65) faisant un mouvement de va-et-vient entre une position dépliée, dans laquelle une lame agit sur un conteneur correspondant logé dans une cuvette de la roue étoile de réunion (5) pour maintenir le conteneur dans sa cuvette, et une position repliée au moins en partie, dans laquelle la même lame est désengagée partiellement de la cuvette par la présence du conteneur qui, entre-temps, s'est rapproché de la roue étoile auxiliaire (6) suite à la rotation de la roue étoile de réunion (5).

12. Appareil selon la revendication 11, comprenant des moyens pour activer le mouvement de va-et-vient des lames tournantes (65) de la roue étoile auxiliaire (6).

13. Appareil selon la revendication 12, dans lequel lesdits moyens d'activation du mouvement de va-et-vient des lames tournantes (65) de la roue étoile auxiliaire (6), comprennent plusieurs éléments longitudinaux élastiques, chacun ayant une première extrémité fixée de manière pivotable sur la roue étoile auxiliaire (6) et une deuxième extrémité fixée à la portion intermédiaire (65b) d'une lame correspondante.

14. Appareil selon la revendication 12, dans lequel lesdits moyens d'activation du mouvement de va-et-vient des lames tournantes (65) de la roue étoile auxiliaire (6), comprennent plusieurs éléments élastiques de torsion, étant chacun fixé à la roue étoile auxiliaire (6) et relié à la portion de raccord pivotable (65a) d'une lame correspondante.

15. Appareil selon l'une quelconque des revendications précédentes de 5 à 14, dans lequel ladite première série et ladite deuxième série de lames (55, 65) sont en matière plastique.

16. Appareil selon les revendications 2 ou 3, comprenant un disque (95) situé sur ladite couche supérieure et faisant saillie à l'extérieur d'une roue étoile pour guider le col d'un conteneur, afin d'assurer une plus grande stabilité pendant le transport.
